# EUROPÄISCHE PATENTSCHRIFT

(11) **EP 1 911 981 B1**
(45) Veröffentlichungstag und Bekanntmachung des Hinweises auf die Patenterteilung: **30.11.2011**
(21) Anmeldenummer: 07019004.6
(22) Anmeldetag: 27.09.2007
(51) Int. Cl.: F16B 31/02, H01R 4/36

(54) **Befestigungsmittel, insbesondere Abreißschraube, mit abtrennbarem Klemmabschnitt**
Fastening device, in particular twist-off screw, with separable clamping section
Dispositif de fixation, en particulier vis frangible dotée d'une section de blocage séparable

(30) Priorität: 10.10.2006 DE 102006048177
(43) Veröffentlichungstag der Anmeldung: 16.04.2008
(73) Patentinhaber: Pfisterer Kontaktsysteme GmbH, 73650 Winterbach (DE)
(72) Erfinder: Frank, Erich, 73269 Hochdorf (DE); Gross, Herve, 89518 Heidenheim an der Brenz (DE)
(74) Vertreter: Crazzolara, Helmut

(56) Entgegenhaltungen:
- EP-A1- 1 378 671
- EP-A1- 1 626 187
- WO-A1-96/31706
- GB-A- 748 919
- GB-A- 2 281 599
- US-A- 3 512 447

## Beschreibung

Die Erfindung betrifft ein Befestigungsmittel gemäß dem Oberbegriff des Anspruchs 1, insbesondere eine Abreißschraube mit abtrennbarem Klemmabschnitt.

Beispielsweise in der Schraubverbindungstechnik von Kabelleitern für die Energietechnik besteht die Anforderung, dass Befestigungsschrauben von Verbindungselementen, insbesondere Schraubklemmen, immer nahe der Oberfläche des Klemmenkörpers abreißen, insbesondere dass die Verbindungselemente nicht über die Oberfläche des Klemmenkörpers überstehen, da anschließend über den Klemmenkörper Isolierschichten aufgebracht werden, beispielsweise Isoliermuffen, und jeder Überstand über den Klemmenkörper diese Isolationsschichten beschädigen kann.

Aus der DE 199 60 198 A1 ist ein Befestigungsmittel bekannt, dessen Gewindebereich diskrete Abreißstellen als sogenannte Sollbruchstellen aufweist. Die Auswahl der jeweiligen Sollbruchstelle erfolgt über in die Werkzeugaufnahme einsetzbare Distanzierelemente.

Aus der WO 96/31706 ist ein Befestigungsmittel bekannt, bei dem die Abreißdrehmomente von der Schraubenspitze zu dem Schraubenkopf des Gewindebereiches zunehmen. Auch dieses Befestigungsmittel weist diskrete Sollbruchstellen aufweist, die durch Einschnitte in den Schraubenbolzen definiert sind.

Aus der DE 103 12 147 A1 ist ein Befestigungsmittel bekannt, bei dem durch eine konische Bohrung im Bereich des Außengewindes eine kontinuierliche Zunahme der Wandstärke des Gewindeabschnitts bereitgestellt wird, die ein stufenloses Abreißen des Befestigungsmittels ermöglicht.

Aus der US 3,512,447 A oder der DE 1 944 805 A ist ein Befestigungsmittel gemäß dem Oberbegriff des Anspruchs 1 bekannt. Dabei weist eine Mutter zwei Abschnitte mit einem durchgehenden Innengewinde auf, wobei beim Aufschrauben auf einen Schraubbolzen die Verbindungsstelle der beiden Muttern abreißt und beim weiteren Anziehen die beiden Abschnitte gegeneinander gekontert und dadurch gesichert werden.

Die auf einen zu klemmenden Gegenstand, insbesondere einen zu klemmenden elektrischen Leiter, wirkende Klemmkraft solcher Abreißschrauben bestimmt sich aus dem Zusammenspiel der beim Schrauben auftretenden Gewindereibung und der beim Klemmen auftretenden Kopfreibung. Ist die Kopfreibung, die beispielsweise durch den Reibkoeffizienten des Werkstoffes der Schraube in Bezug auf den Werkstoff des zu klemmenden Gegenstandes bestimmt ist, zu groß, besteht die Gefahr, dass die Schraube bei einer zu geringen Klemmkraft abreißt und demzufolge die dauerhafte Bereitstellung der erforderlichen Klemmkraft nicht gewährleistet ist.

Aus diesem Grund wird bei den bekannten Abreißschrauben das Reibverhalten durch die Verwendung von Schmierstoffen oder Beschichtungen der Abreißschraube eingestellt. Dies ist allerdings mit einem Mehraufwand bei der Fertigung verbunden. Trotz des Einsatzes solcher Hilfsmittel können außerdem die in einigen Anwendungsfeldern für mehrere Jahrzehnte auch unter signifikanten Temperaturschwankungen geforderten Betriebssicherheiten nicht immer in dem gewünschten Maß gewährleistet werden.

Der Erfindung liegt daher die Aufgabe zugrunde, ein Befestigungsmittel bereitzustellen, welches die Nachteile des Standes der Technik überwindet. Insbesondere soll das erfindungsgemäße Befestigungsmittel dauerhaft eine mechanisch stabile und stromtragfähige Verbindung gewährleisten, unabhängig vom Werkstoff des zu klemmenden Gegenstandes, insbesondere unabhängig vom Werkstoff eines zu klemmenden elektrischen Leiters. Das Befestigungsmittel soll darüber hinaus kostengünstig herstellbar sein und beim Einschrauben zuverlässig an der geeignetsten Stelle abreißen.

Diese Aufgabe ist durch das im Anspruch 1 bestimmte Befestigungsmittel gelöst. Besondere Ausführungsarten der Erfindung sind in den Unteransprüchen bestimmt.

In einer Ausführungsart weist das Befestigungsmittel einen beispielsweise durch einen radialen Einstich von dem ersten Abschnitt separierten Klemmabschnitt auf, der beim Verschrauben des Befestigungsmittels in Anlage an den zu klemmenden Gegenstand kommt, beispielsweise in Anlage an eine elektrische Anschlussleitung. Eine solche Leitung kann beispielsweise in einen Klemmenkörper eingesteckt sein, der im Wesentlichen hohlzylindrisch ausgebildet ist und eine radial zu seiner Längsachse ausgerichtete Gewindebohrung aufweist, in welche das erfindungsgemäße Befestigungsmittel einschraubbar ist.

Beim Einschrauben des Befestigungsmittels werden die auf den Klemmabschnitt wirkenden Kräfte infolge der Klemmung der Anschlussleitung so groß, dass der Klemmabschnitt von dem ersten Abschnitt abgetrennt wird. Bei einem weiteren Eindrehen des erste Abschnitts kommt es zu einer Relativdrehbewegung zwischen dem ersten Abschnitt und dem Klemmabschnitt, die größer ist als die Relativdrehbewegung zwischen dem Klemmabschnitt und dem zu klemmenden Gegenstand.

In Abhängigkeit der Reibkoeffizienten, die zwischen Klemmabschnitt und dem zu klemmenden Gegenstand auftreten, und der wirksamen Reibradien kann es auch so weit kommen, dass der Klemmabschnitt überhaupt nicht mehr mitdreht, sondern hinsichtlich seiner Drehbewegung durch die auftretenden Reibkräfte an dem zu klemmenden Gegenstand fixiert ist. Durch ein weiterhin mögliches Eindrehen des ersten Abschnitts wird eine Kraft in axiale Richtung bezogen auf die Längsachse des Befestigungsmittels auf den zu klemmenden Gegenstand ausgeübt, sodass in jedem Fall die für das Klemmen erforderlichen Kräfte bereitgestellt werden. Erst wenn das Abreißdrehmoment erreicht wird, das die erforderliche Klemmkraft bereitstellt, reißt das Befestigungsmittel ab und der Zustand des geklemmten Gegenstandes ist dauerhaft und zuverlässig fixiert.

Durch den abtrennbaren Klemmabschnitt ist gewährleistet, dass die nach dem Abtrennen des Klemmabschnitts zwischen dem Klemmabschnitt und dem ersten Abschnitt auftretenden Reibkräfte, die der Kopfreibung einer konventionellen Abreißschraube entsprechen, unabhängig von dem Werkstoff des zu klemmenden Gegenstandes sind. Dadurch ist gewährleistet, dass das Abreißen des Befestigungsmittels unabhängig von dem Werkstoff des zu klemmenden Gegenstandes immer erst dann erfolgt, wenn die für ein dauerhaftes Klemmen erforderlichen Klemmkräfte erreicht sind.

So kann beispielsweise bei der Anwendung des erfindungsgemäßen Befestigungsmittels in einer elektrischen Klemme der Mittelspannungstechnik, d. h. für Spannungen zwischen 1.000 V und 100.000 V, gewährleistet werden, dass die erforderlichen Klemmkräfte erreicht werden, unabhängig davon, ob beispielsweise ein Aluminiumleiter geklemmt wird, der üblicherweise mit einer hohen Kopfreibung einhergeht, oder ein Kupferleiter, der im Gegensatz hierzu beispielsweise eine geringe Kopfreibung bereitstellt.

Das für das Abtrennen des Klemmabschnitts erforderliche Drehmoment ist dabei geringer als das für das Abreißen des Befestigungsmittels erforderliche Drehmoment. Dadurch ist gewährleistet, dass ein Abreißen des Befestigungsmittels erst dann erfolgen kann, wenn eine Relativdrehbewegung zwischen dem ersten Abschnitt und dem Klemmabschnitt möglich ist. Dadurch wiederum ist gewährleistet, dass die auftretende Kopfreibung überwiegend oder sogar ausschließlich durch die zwischen dem Klemmabschnitt und dem ersten Abschnitt des Befestigungsmittels auftretenden Reibkräfte bestimmt ist.

In einer Ausführungsart bildet der erste Abschnitt eine im Wesentlichen plane Anlagefläche für die Anlage des abgetrennten Klemmabschnittes aus. In einer Ausführungsart bildet der Klemmabschnitt eine plane Anlagefläche für die Anlage an dem ersten Abschnitt aus. Im Ausgangszustand des Befestigungsmittels sind die einander zugewandten Anlageflächen des ersten Abschnitts und des Klemmabschnittes planparallel ausgerichtet und beispielsweise durch einen ringförmigen Einstich gebildet.

Grundsätzlich ist es möglich, auf mindestens eine der beiden Anlageflächen eine Beschichtung aufzubringen, gegebenenfalls auf beiden Anlageflächen oder sogar ganzflächig auf das Befestigungsmittel, durch welche die Reibkoeffizienten betreffend die Reibung zwischen dem ersten Abschnitt und dem abgetrennten Trennabschnitt reduziert ist. Alternativ oder ergänzend hierzu kann auch ein Schmierstoff auf mindestens eine der beiden Anlageflächen aufgebracht werden, beispielsweise ein Silikonfett.

In einer Ausführungsart weist der Klemmabschnitt auf seiner dem ersten Abschnitt abgewandten Stirnfläche eine geschlossene Oberfläche auf. Insbesondere dann, wenn diese geschlossene Oberfläche auch nach dem Abtrennen des Klemmabschnittes erhalten bleibt, wird dadurch eine großflächige Anlage an den zu klemmenden Gegenstand gewährleistet und außerdem auch eine Verletzung der Oberfläche des zu klemmenden Gegenstandes zuverlässig verhindert. Die geschlossene Oberfläche kann insbesondere mindestens abschnittsweise plan sein, alternativ oder ergänzend aber auch mindestens abschnittsweise konkav oder insbesondere konvex gewölbt sein.

In einer Ausführungsart weist der erste Abschnitt ein Sackloch auf, insbesondere ein Sackloch, das zu einem dem Klemmabschnitt abgewandten Ende des ersten Abschnitts hin offen ist. Das Sackloch kann mindestens abschnittsweise konisch ausgebildet sein, wobei dieser Konus dazu dient, ein stufenloses Abreißen des Befestigungsmittels an der geeigneten Stelle zu gewährleisten. Der konische Bereich kann sich insbesondere über jenen Bereich erstrecken, in dem der erste Abschnitt beispielsweise auf seiner Außenumfangsfläche ein Außengewinde aufweist, mittels dem das Befestigungsmittel mit einem Gegenstand verschraubt werden kann. Der Konuswinkel beträgt vorzugsweise weniger als 2° und insbesondere zwischen 0,75 und 0,9°.

Durch die konische Bohrung nimmt das Abreißdrehmoment in Richtung auf das dem Klemmabschnitt entfernte Ende des Befestigungsmittels kontinuierlich zu. Das Gewinde beispielsweise eines Klemmenkörpers, in welches das Befestigungsmittel eingeschraubt werden kann, wirkt dabei stützend auf das Außengewinde und gewährleistet, dass das Befestigungsmittel stets an oder nahe jener Stelle abreißt, an der das Befestigungsmittel aus dem Klemmenkörper austritt. Dadurch, dass die Schraube an kontinuierlichen Stellen abreißen kann, wird unabhängig von der Einschraubtiefe des Befestigungsmittels ein Überstand des abgerissenen Gewindebereichs über den Klemmenkörper verhindert.

In einer Ausführungsart weist der erste Abschnitt des Befestigungsmittels im Bereich des Sacklochs ein weiteres Gewinde auf. Dabei kann es sich beispielsweise um ein Innengewinde handeln, mittels dem eine Betätigungsschraube oder ein Gewindestift in die sacklochartige Öffnung des Befestigungsmittels eingeschraubt werden kann. Diese Betätigungsschraube kann sich an der von dem Sackloch gebildeten Bodenfläche abstützen, womit sich nach dem Einschrauben der Betätigungsschraube in das Sackloch eine drehfeste Verbindung zwischen Betätigungsschraube und Befestigungsmittel ergibt. Das Befestigungsmittel kann anschließend mittels der Betätigungsschraube beispielsweise in einen Klemmenkörper eingeschraubt werden, bis es in klemmende Anlage an den zu klemmenden Gegenstand kommt. Bei einem weiteren Drehen der Betätigungsschraube kommt es aufgrund des Eingriffs der Betätigungsschraube in das Innengewinde und der Abstützung an der Bodenfläche zu einer kombinierten Torsions- und Zugbelastung des Befestigungsmittels, durch welche das Abreißen an der geeigneten Stelle gefördert wird.

In einer Ausführungsart weist die Bodenfläche des Sacklochs eine Bohrung auf, vorzugsweise eine zentrische Bohrung. Diese Bohrung kann so ausgestaltet sein, dass sie bis nahe an einen Verbindungsabschnitt heranreicht, mittels dem im Ausgangszustand des Befestigungsmittels der Klemmabschnitt mit dem ersten Abschnitt verbunden ist. Durch diese Bohrung kann beispielsweise eine Solltrennstelle des Verbindungsabschnitts definiert werden, an welcher der Klemmabschnitt von dem ersten Abschnitt abtrennbar ist. Die Bohrung kann so groß gewählt werden, dass nach dem Abtrennen der Verbindungsabschnitt in die Bohrung eintreten kann. Dadurch kann eine Drehbeweglichkeit des abgetrennten Klemmabschnitts gegenüber dem ersten Abschnitt gewährleistet werden. Der Verbindungsabschnitt kann insbesondere als im Querschnitt kreiszylindrischer Stutzen ausgebildet sein. In diesem Fall ist es auch möglich, dass durch den Eintritt des Verbindungsabschnitts nach dem Abtrennen in die Bohrung eine gewisse Führung für die Relativdrehbewegung zwischen dem ersten Abschnitt und dem Klemmabschnitt gewährleistet ist.

In einer Ausführungsart ragt die Bohrung in den Verbindungsabschnitt hinein. Abhängig davon, wie weit die Bohrung in den Verbindungsabschnitt hineinragt, kann die Solltrennstelle zum Abtrennen des Klemmabschnitts von dem ersten Abschnitt auch so platziert werden, dass ein Fortsatz des Verbindungsabschnitts als zapfenartige Verlängerung des ersten Abschnitts verbleibt und der Klemmabschnitt im abgetrennten Zustand die Form einer Ringscheibe hat, die um den zapfenartigen Vorsprung des Verbindungsabschnitts drehbar ist. In diesem Fall kommt es in der Regel zu einem gewissen axialen Überstand des verbleibenden Verbindungsabschnitts gegenüber der auf den zu klemmenden Gegenstand hinweisenden Anlagefläche des Klemmabschnittes. Dies kann in einigen Fällen vorteilhaft sein, weil durch die Drehbewegung des an dem zu klemmenden Gegenstand anliegenden Verbindungsabschnitts eine gewisse Fixierung des klemmenden Gegenstandes erfolgt. Die dabei auftretende Kopfreibung ist aufgrund des geringen wirksamen Reibradius vernachlässigbar.

In einer Ausführungsart kann in die Bohrung außerdem ein Abdeckelement zum Abdecken einer durch das Abreißen des Befestigungsmittels entstehenden Öffnung einsteckbar sein. Alternativ oder ergänzend kann auch das Sackloch zum Einstecken eines solchen Abdeckelements vorgesehen sein.

In einer Ausführungsart ist das Befestigungsmittel aus einem korrosionsbeständigen Metall hergestellt. Besonders vorteilhaft ist die Herstellung aus Messing der Zusammensetzung von CuZn39Pb3 R470. Wie bereits oben beschrieben, kann die Verwendung einer Beschichtung in einigen Anwendungsfällen vorteilhaft sein, beispielsweise einer Beschichtung aus Zinn. Alternativ hierzu kann aber auch das blanke Messing als Werkstoff eingesetzt werden.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Querschnitt durch ein erstes Ausführungsbeispiel eines erfindungsgemäßen Befestigungsmittels, und
- Fign. 2 bis 4: zeigen die Abfolge des Abtrennens des Trennabschnitts und des Abreißens des Befestigungsmittels für ein zweites Ausführungsbeispiel.

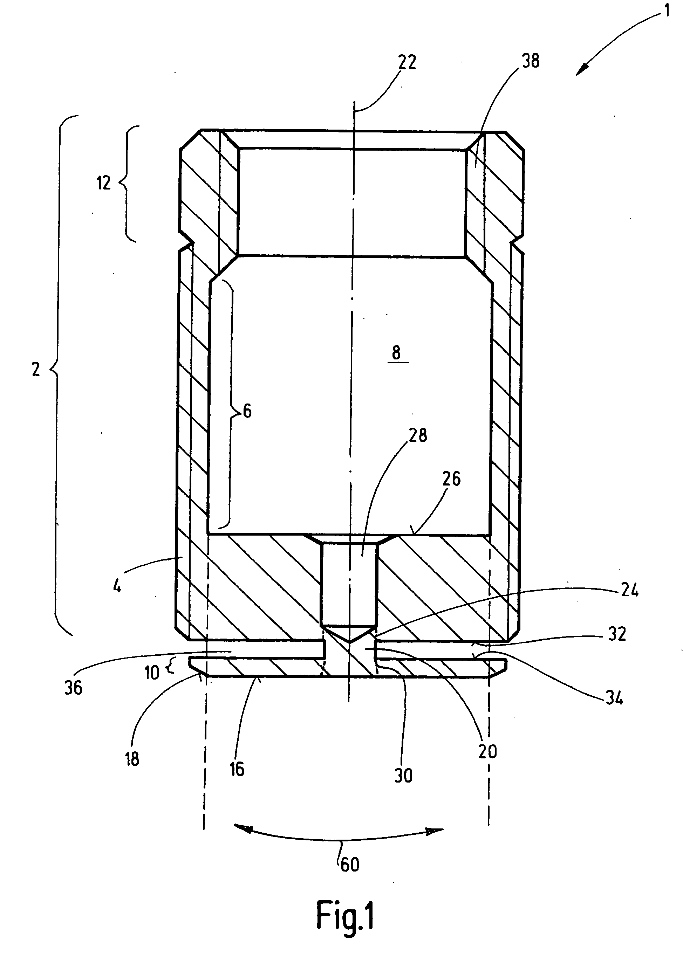

Die Fig. 1 zeigt einen Querschnitt durch ein erstes Ausführungsbeispiel eines erfindungsgemäßen Befestigungsmittels 1. Ein erster Abschnitt 2 weist mindestens abschnittsweise ein Gewinde auf, im dargestellten Ausführungsbeispiel ein Außengewinde, zum Verschrauben des Befestigungsmittels 1 mit einem (nicht dargestellten) Gegenstück, beispielsweise einem Klemmenkörper für eine elektrische Mittelspannungsklemme. Bei Überschreiten eines ersten Drehmomentes reißt das Befestigungsmittel insbesondere im Bereich des ersten Abschnittes 2, vorzugsweise im Bereich jenes Teiles des ersten Abschnittes 2, in dem der erste Abschnitt 2 das Gewinde 4 aufweist, und dort wieder vorzugsweise in jenem Bereich, in dem ein konischer Abschnitt 6 mit einem Kegelwinkel 60 von beispielsweise etwa 0,82° eines Sackloches 8 für eine kontinuierlich veränderbare Wandstärke des ersten Abschnittes 2 sorgt.

Das Befestigungsmittel 1 weist außerdem einen Klemmabschnitt 10 auf, der im in der Fig. 1 dargestellten Ausgangszustand des Befestigungsmittels 1 einstückig mit dem ersten Abschnitt 2 ausgebildet ist. Der erste Abschnitt 2 weist dabei im Wesentlichen die Form eines kreiszylindrischen Körpers auf. An seinem dem Klemmabschnitt 10 gegenüberliegenden axialen Ende weist der erste Abschnitt 2 einen Endabschnitt 12 auf, der im dargestellten Ausführungsbeispiel kein Gewinde 4 auf der Außenseite trägt. Der Außendurchmesser des Endabschnitts 12 stimmt dagegen mit dem Außendurchmesser des verbleibenden Teils des ersten Abschnitts 2 überein. Der Endabschnitt kann eine Werkzeugangriffsfläche aufweisen für das Einschrauben des Befestigungsmittels 1.

Der Klemmabschnitt 10 ist im Wesentlichen scheibenförmig. Auf seiner dem ersten Abschnitt 2 abgewandten Stirnfläche 16 weist der Klemmabschnitt 10 eine geschlossene Oberfläche auf, die im dargestellten Ausführungsbeispiel plan ist. Lediglich radial außen ist die Stirnfläche 16 mit einer Fase 18 versehen, durch die ein Einführen des Befestigungsmittels 1 in eine Gewindebohrung vereinfacht ist.

Der Klemmabschnitt 10 ist über einen Verbindungsabschnitt 20 mit dem ersten Abschnitt 2 verbunden. Die axiale Erstreckung des Verbindungsabschnitts 20 in Richtung der Längsachse 22 des Befestigungsmittels 1 beträgt dabei zwischen 50 bis 150 % der Dicke der axialen Ausdehnung des Klemmabschnitts 10, vorzugsweise zwischen 80 und 120 %. Punktiert sind in der Fig. 1 die möglichen Solltrennstellen 24, 30 für ein Abtrennen des Klemmabschnitts 10 von dem ersten Abschnitt 2 dargestellt.

Eine erste Solltrennstelle 24 liegt im Bereich des dem Klemmabschnitt 10 zugewandten Endes des ersten Abschnitts 2. Hierzu ist in das Sackloch 8, insbesondere in die Bodenfläche 26 des Sacklochs 8 eine vorzugsweise in Bezug auf die Längsachse 22 zentrische Bohrung 28 eingebracht, die bis nahe an den Verbindungsabschnitt 20 heranreicht. Die lichte Weite der vorzugsweise kreiszylindrischen Bohrung 28 ist dabei etwas größer gewählt als der Außendurchmesser des vorzugsweise ebenfalls kreiszylindrischen Verbindungsabschnitts 20. Dadurch fällt nach einem Abtrennen des Klemmabschnitts 10 der Verbindungsabschnitt 20 als Zapfen in die Bohrung 28 hinein und der erste Abschnitt 2 ist gegenüber dem Klemmabschnitt 10 drehbar, der aufgrund der auftretenden Kopfreibung an dem zu klemmenden Gegenstand mehr oder weniger fixiert ist.

Eine zweite Solltrennstelle 30 ist im Bereich des Klemmabschnitts 10 angeordnet und kann auch durch eine entsprechende Einformung in den Klemmabschnitt 30 definiert sein, beispielsweise durch einen axialen Einstich in den Klemmabschnitt. Kommt es an dieser Stelle zu einem Abtrennen, verbleibt ein zapfenartiger Vorsprung des Verbindungsabschnitts 20 drehfest und einstückig mit dem ersten Abschnitt 2 verbunden, wohingegen der Klemmabschnitt 10 sich als Lochscheibe abtrennt und um den als Zapfenlager wirkenden Verbindungsabschnitt 20 drehbar ist.

In beiden Fällen kommen die von dem ersten Abschnitt 2 stirnseitig ausgebildete erste Anlagefläche 32 und die von dem Klemmabschnitt 10 ausgebildete zweite Anlagefläche 34, die im Ausgangszustand planparallel zueinander beabstandet angeordnet sind, in Anlage aneinander. Dadurch ergibt sich eine definierte Reibfläche mit insbesondere definiertem Reibkoeffizienten, der lediglich von dem Werkstoff des Befestigungsmittels 1 und einem gegebenenfalls in den durch einen zweiten Einstich 36 gebildeten Ringspalt eingeführten Schmiermittel bestimmt ist, nicht jedoch durch den Reibkoeffizienten zwischen dem Klemmabschnitt 10 und dem Werkstoff des zu klemmenden Gegenstandes.

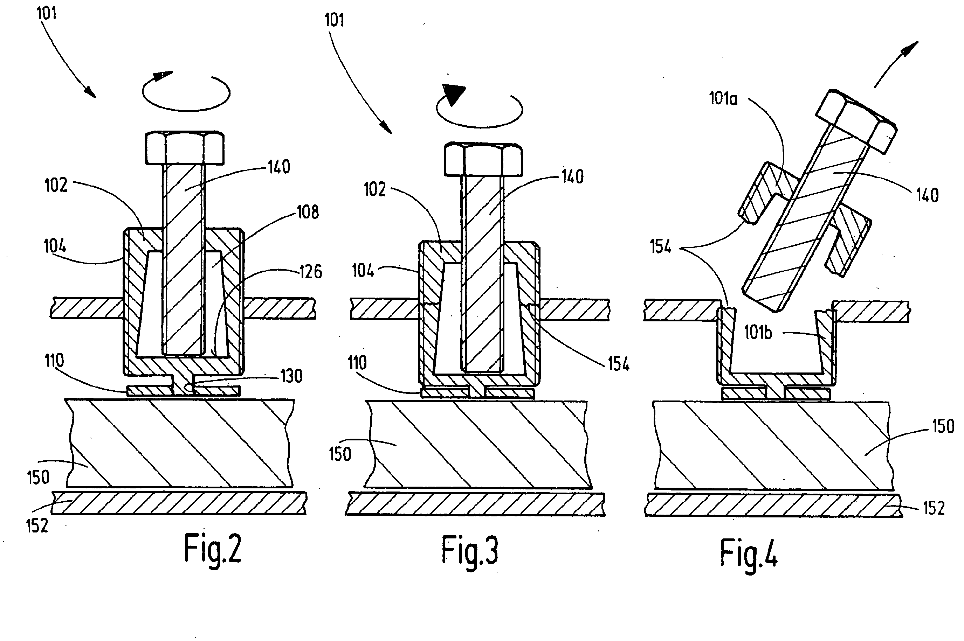

Nahe seinem dem Klemmabschnitt 10 abgewandten, nach außen hin offenen Ende des Sacklochs 8 weist der erste Abschnitt 2 ein weiteres Gewinde 38 auf, insbesondere ein Innengewinde, für das Einschrauben einer Betätigungsschraube 140 (Fig. 2) oder eines Gewindestiftes in das Sackloch 8. Wie sich insbesondere aus den Figuren 2 bis 4 ergibt, kann durch eine solche Betätigungsschraube 140 das Befestigungsmittel 1 an der geeigneten Stelle abgerissen werden. Hierzu stützt sich die Betätigungsschraube 140 an der Bodenfläche 26 des Sacklochs 8 ab und übt dadurch beim Eindrehen des Befestigungsmittels 1 eine kombinierte Torsions- und Zugbelastung insbesondere auf den konischen Abschnitt 6 des ersten Abschnitts 2 aus.

Die Figuren 2 bis 4 zeigen die Abfolge des Abtrennens des Trennabschnitts 10 und des Abreißens des Befestigungsmittels 1 für ein zweites Ausführungsbeispiel. Beispielhaft ist dargestellt, wie mittels eines Befestigungsmittels 101 eine Anschlussleitung 150 einer Mittelspannungsversorgungsleitung in einer einen Klemmenkörper 152 aufweisenden elektrischen Klemme.

Die Fig. 2 zeigt dabei den Zustand, in dem das Befestigungsmittel 101 mittels der in das weitere Gewinde 38 (Fig. 1) eingedrehten Betätigungsschraube 140 in eine Gewindebohrung des Klemmenkörpers 152 eingeschraubt ist. Hierzu kann entweder das Befestigungsmittel 101 manuell oder mittels eines Werkzeuges in die Gewindebohrung des Klemmenkörpers 152 eingeschraubt werden; das Befestigungsmittel 101 kann hierfür beispielsweise in dem Endabschnitt 12 (Fig. 1) eine Angriffsfläche für ein Werkzeug aufweisen, beispielsweise einen Außensechskant. Alternativ hierzu kann die Betätigungsschraube 140 auch bereits soweit in das Sackloch 108 eingeschraubt werden, dass sie an der Bodenfläche 126 in Anlage ist und dadurch eine drehfeste Verbindung zwischen der Betätigungsschraube 140 und dem Befestigungsmittel 101 entsteht. Nachdem der in der Fig. 2 dargestellte Zustand erreicht ist, in dem der Klemmabschnitt 110 in Anlage an der Anschlussleitung 150 ist, kann durch ein Weiterdrehen der Betätigungsschraube 140 der Klemmabschnitt 110 von dem ersten Abschnitt 102 abgetrennt werden. In dem dargestellten Ausführungsbeispiel erfolgt das Trennen an der zweiten Solltrennstelle 130.

In der Fig. 3 ist der Zustand dargestellt, der sich infolge eines weiteren Eindrehens bzw. Verschraubens des Befestigungsmittels 101 ergibt. Hierzu wird die Betätigungsschraube 140 mit erhöhtem Kraftaufwand weitergedreht. Dabei kommt der Klemmabschnitt 110 einerseits in klemmende Anlage an die Anschlussleitung 150 und andererseits in gleitende Anlage an den ersten Abschnitt 102. Die dabei entstehende Kopfreibung ist im Wesentlichen durch das Reibverhalten zwischen dem Klemmabschnitt 110 und dem ersten Abschnitt 102 bestimmt und insbesondere im Wesentlichen unabhängig von dem Reibverhalten zwischen dem Klemmabschnitt 110 und der Anschlussleitung 150.

Durch die in dem Gewinde 104 auftretende Reibung kommt es bei einem Weiterdrehen zu einem Abreißen des Befestigungsmittels 101 an der in der Fig. 3 dargestellten Abreißstelle 154. Dies erfolgt in jedem Fall noch innerhalb der Gewindebohrung der Wandung des Klemmenkörpers 152, wie sich aus der Fig. 4 ergibt. Der abgerissene Teil 101a des Befestigungsmittels verbleibt an der Betätigungsschraube 140 und kann mit dieser abgenommen werden. In dem Klemmenkörper 152 bleibt der klemmende Abschnitt 101 b und klemmt dauerhaft zuverlässig die Anschlussleitung 150. Besonders vorteilhaft ist dabei, dass der in dem Klemmenkörper 152 verbleibende Teil 101 b des Befestigungsmittels 101 nicht über die äußere Umfangsfläche des Klemmenkörpers 152 übersteht.

## Patentansprüche

1. Befestigungsmittel (1), insbesondere Abreißschraube, mit einem ein Gewinde aufweisenden ersten Abschnitt (2), wobei das Befestigungsmittel (1) bei dessen Schrauben durch Überschreiten eines ersten Drehmoments im ersten Abschnitt (2) abreißbar ist, und mit einem Klemmabschnitt (10), der im Ausgangszustand des Befestigungsmittels (1) einstückig mit dem ersten Abschnitt (2) ausgebildet ist, aber infolge des Schraubens des Befestigungsmittels (1) von dem ersten Abschnitt (2) abtrennbar ist, und wobei ein für das Abtrennen des Klemmabschnitts (10) erforderliches zweites Drehmoment geringer ist als das für das Abreißen des Befestigungsmittels (1) erforderliche erste Drehmoment, **dadurch gekennzeichnet, dass** der erste Abschnitt (2) ein Außengewinde (4) aufweist, und dass der Klemmabschnitt (10) einen Durchmesser aufweist, der kleiner ist als der Durchmesser des Außengewindes des ersten Abschnitts (2).

2. Befestigungsmittel (1) nach Anspruch 1, **dadurch gekennzeichnet, dass** der Klemmabschnitt (10) auf seiner dem ersten Abschnitt (2) abgewandten Stirnfläche (16) eine geschlossene Oberfläche aufweist.

3. Befestigungsmittel (1) nach Anspruch 2, **dadurch gekennzeichnet, dass** die geschlossene Oberfläche plan ist.

4. Befestigungsmittel (1) nach einem der vorangehenden Ansprüche,
**dadurch gekennzeichnet, dass** der erste Abschnitt (2) ein Sackloch (8) aufweist, insbesondere ein Sackloch (8), das zu einem dem Klemmabschnitt (10) abgewandten Ende des ersten Abschnitts (2) hin offen ist.

5. Befestigungsmittel (1) nach Anspruch 4, **dadurch gekennzeichnet, dass** der erste Abschnitt (2) im Bereich des Sacklochs (8) ein weiteres Gewinde (38) aufweist, insbesondere ein Innengewinde, für das Ein- oder Aufschrauben einer Betätigungsschraube (140) oder eines Gewindestiftes in das Sackloch (8).

6. Befestigungsmittel (1) nach Anspruch 4 oder 5, **dadurch gekennzeichnet, dass** eine Bodenfläche (26) des Sacklochs (8) eine Bohrung (28) aufweist, vorzugsweise eine zentrische Bohrung, insbesondere ein weiteres Sackloch.

7. Befestigungsmittel (1) nach Anspruch 6, **dadurch gekennzeichnet, dass** die Bohrung (28) bis nahe an einen Verbindungsabschnitt (20) heranreicht, mittels dem im Ausgangszustand des Befestigungsmittels (1) der Klemmabschnitt (10) mit dem ersten Abschnitt (2) verbunden ist.

8. Befestigungsmittel (1) nach Anspruch 6, **dadurch gekennzeichnet, dass** die Bohrung (28) in einen Verbindungsabschnitt (20) hineinragt, mittels dem im Ausgangszustand des Befestigungsmittels (1) der Klemmabschnitt (10) mit dem ersten Abschnitt (2) verbunden ist.

9. Befestigungsmittel (1) nach einem der Ansprüche 6 bis 8, **dadurch gekennzeichnet, dass** in die Bohrung (28) ein Abdeckelement einsteckbar ist zum Abdecken einer durch das Abreißen des Befestigungsmittels (1) entstehenden Öffnung.

10. Befestigungsmittel (1) einem der vorangehenden Ansprüche, **dadurch gekennzeichnet, dass** das Befestigungsmittel (1) aus einem korrosionsbeständigen Metall hergestellt ist, insbesondere aus Messing.

## Claims

1. Fastening means (1), especially a snap-off screw, having a first portion (2) comprising a thread, the fastening means (1), as it is being screwed in, being able to be snapped off by exceeding a first torque in the first portion (2), and having a clamping portion (10) which, in the starting state of the fastening means (1), is formed in one piece with the first portion (2) but, as a result of the screwing-in of the fastening means (1), is separable from the first portion (2), and a second torque necessary for the separation of the clamping portion (10) being smaller than the first torque necessary for the snapping-off of the fastening means (1), **characterised in that** the first portion (2) has an external thread (4), and **in that** the clamping portion (10) has a diameter which is smaller than the diameter of the external thread of the first portion (2).

2. Fastening means (1) according to claim 1, **characterised in that** the clamping portion (10) has a closed surface on its end face (16) remote from the first portion (2).

3. Fastening means (1) according to claim 2, **characterised in that** the closed surface is flat.

4. Fastening means (1) according to any one of the preceding claims, **characterised in that** the first portion (2) has a blind hole (8), especially a blind hole (8) which is open towards an end of the first portion (2) that is remote from the clamping portion (10).

5. Fastening means (1) according to claim 4, **characterised in that** the first portion (2) has, in the region of the blind hole (8), a further thread (38), especially an internal thread, for the screwing-in or tightening of an operating screw (140) or a threaded pin into/in the blind hole (8).

6. Fastening means (1) according to claim 4 or 5, **characterised in that** a bottom surface (26) of the blind hole (8) has a drilled hole (28), preferably a central drilled hole, especially a further blind hole.

7. Fastening means (1) according to claim 6, **characterised in that** the drilled hole (28) reaches as far as the vicinity of a connecting portion (20) by means of which the clamping portion (10) is connected to the first portion (2) in the starting state of the fastening means (1).

8. Fastening means (1) according to claim 6, **characterised in that** the drilled hole (28) projects into a connecting portion (20) by means of which the clamping portion (10) is connected to the first portion (2) in the starting state of the fastening means (1).

9. Fastening means (1) according to any one of claims 6 to 8, **characterised in that** a covering member is insertable into the drilled hole (28) in order to cover an opening resulting from the snapping-off of the fastening means (1).

10. Fastening means (1) according to any one of the preceding claims, **characterised in that** the fastening means (1) is manufactured from a corrosion-resistant metal, especially from brass.

## Revendications

1. Moyen (1) de fixation, notamment vis frangible, comprenant une première section (2) ayant un filetage, le moyen (1) de fixation pouvant lors de son vissage être rompu par dépassement d'un premier couple de rotation dans la première section (2), et comprenant une section (10) de blocage, qui, à l'état initial du moyen (1) de fixation, est d'une seule pièce avec la première section (2), mais, à la suite du vissage du moyen (1) une fixation, peut être séparée de la première section (2), et dans lequel un deuxième couple de rotation nécessaire pour la séparation de la section (10) de blocage est plus petit que le premier couple de rotation nécessaire pour la rupture du moyen (1) de fixation,
**caractérisé en ce que** la première section (2) a un filetage (4) extérieur et **en ce que** la section (10) de blocage a un diamètre qui est plus petit que le diamètre du filetage extérieur de la première section (2).

2. Moyen (1) de fixation suivant la revendication 1, **caractérisé en ce que** la section (10) de blocage a une surface fermée sur sa face (16) frontale éloignée du premier tronçon (2).

3. Moyen (1) de fixation suivant la revendication 2, **caractérisé en ce que** la surface fermée est plane.

4. Moyen (1) de fixation suivant l'une des revendications précédentes, **caractérisé en ce que** la première section (2) comporte un trou (8) borgne, notamment un trou (8) borgne qui est ouvert vers une extrémité, éloignée de la section (10) de blocage, de la première section (2).

5. Moyen (1) de fixation suivant la revendication 4, **caractérisé en ce que** la première section (2) a dans la région du trou (8) borgne un autre filetage (38), notamment un taraudage, pour le vissage d'une vis (140) d'actionnement ou d'une tige filetée dans le trou (8) borgne.

6. Moyen (1) de fixation suivant la revendication 4 ou 5, **caractérisé en ce qu'**une surface (26) de fond du trou (8) borgne comporte un trou (28), de préférence un trou centré, notamment un autre trou borgne.

7. Moyen (1) de fixation suivant la revendication 6, **caractérisé en ce que** le trou (28) va jusqu'à proximité d'une section (20) de liaison à l'aide de laquelle lorsque le moyen (1) de fixation est à l'état initial, la section (10) de blocage est reliée à la première section (2).

8. Moyen (1) de fixation suivant la revendication 6, **caractérisé en ce que** le trou (28) pénètre dans une section (20) de liaison à l'aide de laquelle, lorsque le moyen (1) de fixation est à l'état initial, la section (10) de blocage est reliée à la première section (2).

9. Moyen (1) de fixation suivant l'une des revendications 6 à 8, **caractérisé en ce qu'**un élément de recouvrement peut être enfilé dans le trou (28) pour recouvrir une ouverture se créant par la rupture du moyen (1) de fixation.

10. Moyen (1) de fixation suivant l'une des revendications précédentes, **caractérisé en ce que** le moyen (1) de fixation est en un métal résistant à la corrosion, en étant notamment en laiton.
